# EUROPEAN PATENT APPLICATION

(11) **EP 4 199 390 A1**
(43) Date of publication of application: **21.06.2023**
(21) Application number: 21856167.8
(22) Date of filing: 09.08.2021

(54) **COMPUTER NETWORK HACKING PREVENTION SYSTEM AND METHOD**

(30) Priority: 11.08.2020 KR 20200100817
(71) Applicant: Lee, Chung Jong, Gangwon-do 26248 (KR)
(72) Inventor: Lee, Chung Jong, Gangwon-do 26248 (KR)
(74) Representative: Gulde & Partner
(86) International application number: PCT/KR2021/010506
(87) International publication number: WO 2022/035161

(57) **Abstract**

A computer network hacking prevention system and method are disclosed. According to the computer network hacking prevention system and method, in the case of receiving query data or transmitting answer data, a transmission/reception line is immediately switched off upon completion of the transmission/reception of data, so that risks such as hacking can be minimized.

## Description

### TECHNICAL FIELD

The present disclosure relates to a computer network hacking prevention system and method. More particularly, the present disclosure relates to a computer network hacking prevention system and method minimizing a risk such as hacking by immediately switching off a transmission and reception line upon completion of data transmission and reception of data when query data is received from a client terminal or when answer data is transmitted to the client terminal.

### BACKGROUND ART

Today, most companies and public institutions build in-house computer networks to transfer data or manage an electronic approval system between terminals.

With the development of communication technology, company work is increasingly handled out of the office, namely, in the form of working from home or out-of-office work. Workers outside the office access the company's computer network in real-time or intermittently from outside the company to download/upload or sign specific documents.

The out-of-office work makes the security of an in-house computer network vulnerable. Even if security measures are provided, the risk of unauthorized access by a corporate spy or a hacker from the outside inevitably increases when the in-house computer network is open.

In particular, military units handling national security or nuclear power plants that do not tolerate even a minor malfunction require special security management. If hackers infiltrate the national defense computer network, launch missiles, or implant a malicious program to continuously steal a nation's critical information, there could be fatal consequences for national defense. On the other hand, financial institutions are also experiencing situations in which customers' deposits are illegally withdrawn, which is also due to poor security management of the in-house computer network.

As a solution to the problem above, a relay server is placed between a central server and an external network, which approves access by checking an unauthorized access list or authenticating access information.

However, a conventional relay server usually maintains a client's connection until unauthorized access is recognized; moreover, if the relay server fails to recognize the unauthorized access, there is a high possibility that a hacker may infiltrate the central server. What is more, it is not easy to track unauthorized access. Even if unauthorized access is recognized, malicious code may remain in the relay server, even in the central server, once the unauthorized access is made. Accordingly, the central server and the relay server often have to be replaced or formatted.

(Patent document 1) Korean Patent Laid-Open Publication No. 10-1314695 (Publication date: Oct. 07, 2013)

### SUMMARY

To solve the problems above, an object of the present disclosure is to minimize a risk such as hacking by immediately switching off a transmission and reception line upon completion of transmission and reception of data when query data is received from a client terminal or when answer data is transmitted to the client terminal.

According to various embodiments of the present disclosure, a computer network hacking prevention system comprises an account server, which includes a first data storage unit, that confirms access made by a client terminal by receiving access data and client identification data from the client terminal, receives query data from the client terminal, and stores the received query data; a compartment server, which includes a third data storage unit, that is connected to the account server through a third monitoring line and a third data transmission and reception line, determines through the third monitoring line whether the query data exists in the first data storage unit of the account server, receives the query data by switching on the third data transmission and reception line when the query data exists in the first data storage unit, switches off the third data transmission and reception line upon completion of reception, and stores the received query data; and a central server that is connected to the compartment server through a sixth monitoring line and a sixth data transmission and reception line, determines through the sixth monitoring line whether the query data exists in the third data storage unit of the compartment server, receives the query data by switching on the sixth data transmission and reception line when the query data exists in the third data storage unit, and switches off the sixth data transmission and reception line upon completion of reception.

According to various embodiments of the present disclosure, a computer network hacking prevention method for a computer network hacking prevention system including an account server which includes a first data storage unit; a compartment server, which includes a third data storage unit, that is connected to the account server through a third monitoring line and a third data transmission and reception line; and a central server that is connected to the compartment server through a sixth monitoring line and a sixth data transmission and reception line, comprises (a) confirming access made by a client terminal by receiving access data and client identification data from the client terminal, receiving query data from the client terminal, and storing the received query data in the first data storage unit by the account server; (b) determining through the third monitoring line whether the query data exists in the first data storage unit of the account server, receiving the query data by switching on the third data transmission and reception line when the query data exists in the first data storage unit, switching off the third data transmission and reception line upon completion of reception, and storing the received query data in the third data storage unit by the compartment server; and (c) determining through the sixth monitoring line whether the query data exists in the third data storage unit of the compartment server, receiving the query data by switching on the sixth data transmission and reception line when the query data exists in the third data storage unit, and switching off the sixth data transmission and reception line upon completion of reception by the central server.

### ADVANTAGEOUS EFFECTS

A computer network hacking prevention system and method according to the present disclosure provides an advantageous effect in that in the case of receiving query data or transmitting answer data, a transmission and reception line is immediately switched off upon completion of the transmission and reception of data, and thus, a risk such as hacking is minimized.

### BRIEF DESCRIPTION OF THE DRAWINGS

FIG. 1 is a block diagram of a computer network hacking prevention system according to one embodiment of the present disclosure.
FIG. 2 is a block diagram of a computer network hacking prevention system according to another embodiment of the present disclosure.
FIG. 3 is a block diagram of a computer network hacking prevention system according to yet another embodiment of the present disclosure.
FIG. 4 is a first flow diagram of a computer network hacking prevention method according to one embodiment of the present disclosure.
FIG. 5 is a second flow diagram of a computer network hacking prevention method according to one embodiment of the present disclosure.

### DESCRIPTION OF EXEMPLARY EMBODIMENTS

According to an aspect of the present disclosure, a computer network hacking prevention system is proposed, the system comprises: an account server, which includes a first data storage unit, that confirms access made by a client terminal by receiving access data and client identification data from the client terminal, receives query data from the client terminal, and stores the received query data; a compartment server, which includes a third data storage unit, that is connected to the account server through a third monitoring line and a third data transmission and reception line, determines through the third monitoring line whether the query data exists in the first data storage unit of the account server, receives the query data by switching on the third data transmission and reception line when the query data exists in the first data storage unit, switches off the third data transmission and reception line upon completion of reception, and stores the received query data; and a central server that is connected to the compartment server through a sixth monitoring line and a sixth data transmission and reception line, determines through the sixth monitoring line whether the query data exists in the third data storage unit of the compartment server, receives the query data by switching on the sixth data transmission and reception line when the query data exists in the third data storage unit, and switches off the sixth data transmission and reception line upon completion of reception.

In what follows, preferred embodiments of the present disclosure will be described in detail with reference to appended drawings, and it should be noted that the present disclosure is not limited by or confined to the embodiments of the present disclosure.

In what follows, a structure of a computer network hacking prevention system according to one embodiment of the present disclosure will be described.

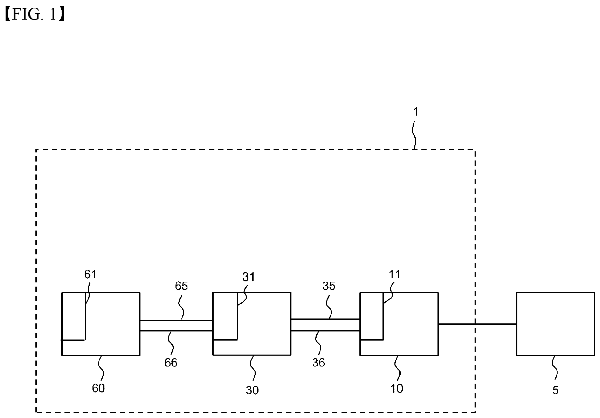

FIG. 1 is a block diagram of a computer network hacking prevention system according to one embodiment of the present disclosure.

The computer network hacking prevention system 1 according to a first embodiment of the present disclosure includes an account server 10, a compartment server 30, and a central server 60.

The account server 10, which includes a first data storage unit 11, is a server to which a client terminal 5 makes access and requests information.

The account server 10 confirms access made by the client terminal 5 by receiving access data and client identification data from the client terminal 5, receives query data from the client terminal 5, and stores completely received query data in the first data storage unit 11.

The client terminal 5 includes all types of terminals that may be used by a user, such as desktop computers, laptop computers, tablet PCs, smartphones, and PDAs.

Access data is used to authenticate a user when the client terminal 5 accesses the account server 10. For example, access data may include a login ID, a password, an IP address, a phone number, and an authentication key, and the client terminal 5 transmits at least one or more of them to the account server 10.

The client identification data is information for the account server 10 to access the client terminal 5, which may include an IP address of the client terminal 5, a phone number of the user of the client terminal 5, and an email address of the user of the client terminal 5.

The account server 10 may be configured so that a plurality of client terminals 5 are connected to one physical server. The account server 10 may also be configured so that a plurality of virtual servers are implemented in one physical server, and a plurality of client terminals 5 are connected to one virtual server, or one client terminal 5 is connected to one virtual server.

When the account server 10 is configured so that a plurality of virtual servers are implemented in one physical server, it may be preferable that for some virtual servers, one virtual server is connected to one client terminal 5 (in the case of VIP customers) while, for the remaining virtual servers, one virtual server is connected to a plurality of client terminal 5 (in the case of common customers).

The compartment server 30 is connected to the account server 10 through a third monitoring line 35 and a third data transmission and reception line 36, which includes a third data storage unit 31.

The compartment server 30 performs a function of minimizing modification of data or risk of hacking by receiving query data stored in the first data storage unit 11 of the account server 10 and physically disconnecting a connection upon completion of data reception.

The lengths of the third monitoring line 35 and the third data transmission and reception line 36 are not subject to a particular limit and may be about 1 to 2 m; however, it is more desirable that the lines have a very short length of about 5 to 10 cm.

Since the third monitoring line 35 is used to determine only whether query data exists in the first data storage unit 11 of the account server 10, and a large amount of data transmission is not required, it is sufficient to use a PS/2 or RS-232 serial cable.

The compartment server 30 determines whether query data exists in the first data storage unit 11 of the account server 10 through the third monitoring line 35, receives the query data by switching on the third data transmission and reception line 36 when the query data exists in the first data storage unit 11, switches off the third data transmission and reception line 36 upon completion of reception, and stores completely received query data in the third data storage unit 31.

However, it is preferable to operate the compartment server 30 to estimate the time required for data reception by considering the size of query data and the transfer speed of the third data transmission and reception line 36, measure the time elapsed since the initiation of data reception, and stop data reception and switch off the third data transmission and reception line 36 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the third data transmission and reception line 36 to be performed by a semiconductor switching element (not shown) to prevent noise generation and data distortion caused when a mechanical switching means is used.

As described above, while maintaining the third data transmission and reception line 36 used for data transmission and reception in a physically disconnected state, the compartment server 30 switches on the third data transmission and reception line 36 and transmits and receives data only when data transmission and reception is required and immediately switches off the third data transmission and reception line 36 upon completion of data transmission and reception, thereby minimizing modification of data or risk of hacking.

The central server 60 is connected to the compartment server 30 through a sixth monitoring line 65 and a sixth data transmission and reception line 66.

The central server 60 performs a function of minimizing modification of data or risk of hacking by receiving query data stored in the third data storage unit 31 of the compartment server 30 and physically disconnecting a connection upon completion of data reception.

The lengths of the sixth monitoring line 65 and the sixth data transmission and reception line 66 are not subject to a particular limit and may be about 1 to 2 m; however, it is more desirable that the lines have a very short length of about 5 to 10 cm.

Since the sixth monitoring line 65 is used to determine only whether query data exists in the third data storage unit 31 of the compartment server 30, and a large amount of data transmission is not required, it is sufficient to use a PS/2 or RS-232 serial cable.

The central server 60 determines whether query data exists in the third data storage unit 31 of the compartment server 30 through the sixth monitoring line 65, receives the query data by switching on the sixth data transmission and reception line 66 when the query data exists in the third data storage unit 31, and switches off the sixth data transmission and reception line 66 upon completion of reception.

However, it is preferable to operate the central server 60 to estimate the time required for data reception by considering the size of query data and the transfer speed of the sixth data transmission and reception line 66, measure the time elapsed since the initiation of data reception, and stop data reception and switch off the sixth data transmission and reception line 66 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the sixth data transmission and reception line 66 to be performed by a semiconductor switching element (not shown) to prevent noise generation and data distortion caused when a mechanical switching means is used.

The central server 60 is configured to include a database 61 that stores answer data corresponding to query data. Although the present embodiment assumes that the database 61 is installed within the central server 60, the database 61 may also be installed separately outside the central server 60.

When reception of query data is completed, the central server 60 extracts answer data corresponding to query data from the database 61, transmits the extracted answer data to the third data storage unit 31 of the compartment server 30 by switching on the sixth data transmission and reception line 66, and switches off the sixth data transmission and reception line 66 upon completion of the transmission.

Meanwhile, the compartment server 30 switches on the third data transmission and reception line 36 to transmit the answer data stored in the third data storage unit 31 to the first data storage unit 11 of the account server 10, stores the answer data therein, and switches off the third data transmission and reception line 36 upon completion of the transmission.

Here, by allowing connection only up to the maximum connection time after data transmission starts, the compartment server 30 and the central server 60 may prevent an abnormally large amount of data compared to the estimated data transmission amount from being transmitted.

In what follows, a computer network hacking prevention system according to another embodiment of the present disclosure will be described.

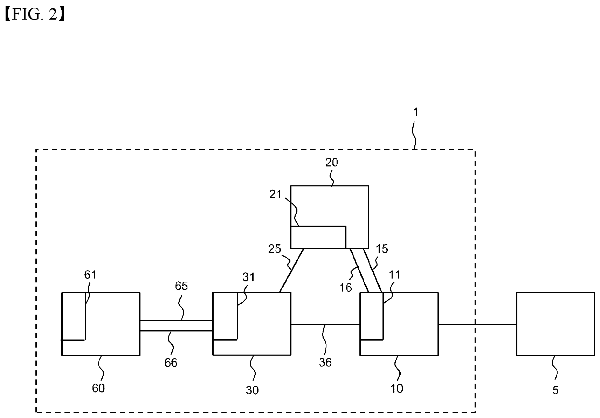

FIG. 2 is a computer network hacking prevention system according to another embodiment of the present disclosure.

The computer network hacking prevention system 1 according to a second embodiment of the present disclosure includes an account server 10, a first authentication server 20, a compartment server 30, and a central server 60.

Since the account server 10 is the same as described in the first embodiment, the descriptions of the account server 10 will not be repeated below.

However, the account server 10 according to the present embodiment confirms access made by the client terminal 5 by receiving access data and client identification data from the client terminal 5, receives query data from the client terminal 5, and stores completely received access data, client identification data, and query data in the first data storage unit 11.

The first authentication server 20 is connected to the account server 10 through the first monitoring line 15 and the first data transmission and reception line 16, which includes a second data storage unit 21.

The first authentication server 20 performs a function of minimizing modification of data or risk of hacking by receiving access data, client identification data, and query data stored in the first data storage unit 11 of the account server 10, physically disconnecting a connection upon completion of data reception, performing client authentication, and determining whether the received query data is suitable to be moved to the central server 60 if the client authentication succeeds.

The lengths of the first monitoring line 15 and the first data transmission and reception line 16 are not subject to a particular limit and may be about 1 to 2 m; however, it is more desirable that the lines have a very short length of about 5 to 10 cm.

Since the first monitoring line 15 is used to determine only whether query data exists in the first data storage unit 11 of the account server 10, and a large amount of data transmission is not required, it is sufficient to use a PS/2 or RS-232 serial cable.

The first authentication server 20 determines whether query data exists in the first data storage unit 11 of the account server 10 through the first monitoring line 15, receives access data, client identification data, and query data by switching on the first data transmission and reception line 16 when the query data exists in the first data storage unit 11, switches off the first data transmission and reception line 16 upon completion of reception, and performs client authentication.

However, it is preferable to operate the first authentication server 20 to estimate the time required for data reception by considering the size of query data and the transfer speed of the first data transmission and reception line 16, measure the time elapsed since the initiation of data reception, and stop data reception and switch off the first data transmission and reception line 16 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the first data transmission and reception line 16 to be performed by a semiconductor switching element (not shown) to prevent noise generation and data distortion caused when a mechanical switching means is used.

When client authentication succeeds, the first authentication server 20 determines whether query data is suitable to be moved to the central server 60.

For example, when the central server 60 allows transmission and storage only for data files but does not allow transmission and storage for program files, the first authentication server 20 examines whether program code is included in the query data and determines the query data to be unsuitable to be moved to another computing module if the query data includes program code.

To this end, a vaccine program for inspection may be installed in the first authentication server 20. The engine of the vaccine program may be configured to be updated manually or automatically through an external network.

However, when the engine of the vaccine program is configured to be automatically updated through an external network, to improve security, the first authentication server 20 should be configured to access only a specific address for updating the engine of the vaccine program.

If a determination result of whether the query data is suitable to be moved to the central server 60 indicates that the query data is suitable to be moved to the central server 60, the first authentication server 20 stores the query data in the second data storage unit 21.

Encryption techniques may be employed for data transmission between the account server 10 and the first data storage unit 11 to prevent the query data stored in the first data storage unit 11 of the account server 10 from being modified or corrupted.

When an encryption technique is used, and a determination result of whether query data exists in the first data storage unit 11 of the account server 10 through the first monitoring line 15 indicates that the query data exists in the first data storage unit 11, the first authentication server 20 switches on the first data transmission and reception line 16, requests the account server 10 to encrypt query data stored in the first data storage unit 11 using an encryption key, and switches off the first data transmission and reception line 16.

Then, the first authentication server 20 determines through the first monitoring line 15 whether encryption of the query data is completed. If it is determined that the encryption is completed, the first authentication server 20 switches on the first data transmission and reception line 16 to receive encrypted data, access data, and client identification data, switches off the first data transmission and reception line 16 upon completion of the reception, and performs client authentication.

When client authentication succeeds, the first authentication server 20 decrypts the received encrypted data using a decryption key and determines whether the decrypted query data is suitable to be moved to the central server 60.

Here, the encryption method may use a secret key encryption method in which encryption and decryption keys are the same or a public key encryption method in which encryption and decryption keys are different from each other.

By using the encryption method, it is possible to clearly prevent the content of the query data from being modified or corrupted before or while the first authentication server 20 or the compartment server 30 receives the query data after the query data is stored in the first data storage unit 11 of the account server 10.

If a determination result of whether the query data is suitable to be moved to the central server 60 indicates that the query data is suitable to be moved to the central server 60, the first authentication server 20 stores the authentication data in the second data storage unit 21.

Meanwhile, the authentication data stored in the second data storage unit 21 may include a decryption key required for decryption of encrypted data (in the case of the secret key encryption method).

The compartment server 30 is connected to the first authentication server 20 through the second monitoring line 25 and connected to the account server through the third data transmission and reception line 36, which includes a third data storage unit 31.

The compartment server 30 performs a function of minimizing modification of data or risk of hacking by receiving query data or encrypted data stored in the first data storage unit 11 of the account server 10 and physically disconnecting a connection upon completion of data reception.

The lengths of the second monitoring line 25 and the third data transmission and reception line 36 are not subject to a particular limit and may be about 1 to 2 m; however, it is more desirable that the lines have a very short length of about 5 to 10 cm.

Since the second monitoring line 25 is used to determine only whether authentication data exists in the second data storage unit 21 of the first authentication server 20, and a large amount of data transmission is not required, it is sufficient to use a PS/2 or RS-232 serial cable.

The compartment server 30 determines whether authentication data exists in the second data storage unit 21 of the first authentication server 20 through the second monitoring line 25, receives query data or encrypted data by switching on the third data transmission and reception line 36 when the authentication data exists in the second data storage unit 21, switches off the third data transmission and reception line 36 upon completion of reception, and stores completely received query data or encrypted data in the third data storage unit 31.

However, it is preferable to operate the compartment server 30 to estimate the time required for data reception by considering the size of query data or encrypted data and the transfer speed of the third data transmission and reception line 36, measure the time elapsed since the initiation of data reception, and stop data reception and switch off the third data transmission and reception line 36 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the third data transmission and reception line 36 to be performed by a semiconductor switching element (not shown) to prevent noise generation and data distortion caused when a mechanical switching means is used.

As described above, while maintaining the third data transmission and reception line 36 used for data transmission and reception in a physically disconnected state, the compartment server 30 switches on the third data transmission and reception line 36 and transmits and receives data only when data transmission and reception is required and immediately switches off the third data transmission and reception line 36 upon completion of data transmission and reception, thereby minimizing modification of data or risk of hacking.

Although not shown in FIG. 2, the compartment server 30 may be connected to the account server 10 through the second data transmission and reception line. This configuration is required when the authentication data stored in the second data storage unit 21 includes a decryption key.

When a determination result of whether authentication data exists in the second data storage unit 21 of the first authentication server 20 through the second monitoring line 25 indicates that the authentication data exists in the second data storage unit 21, the compartment server 30 switches on the second data transmission and reception line, receives the authentication data or decryption key stored in the second data storage unit 21, and switches off the second data transmission and reception line upon completion of the reception.

Here, the completely received decryption key is stored in the third data storage unit 31 together with the query data or encrypted data.

The central server 60 is a server connected to the compartment server 30 through the sixth monitoring line 65 and the sixth data transmission and reception line 66.

The central server 60 performs a function of minimizing modification of data or risk of hacking by receiving query data or encrypted data stored in the third data storage unit 31 of the compartment server 30 and physically disconnecting a connection upon completion of data reception.

The lengths of the sixth monitoring line 65 and the sixth data transmission and reception line 66 are not subject to a particular limit and may be about 1 to 2 m; however, it is more desirable that the lines have a very short length of about 5 to 10 cm.

Since the sixth monitoring line 65 is used to determine only whether query data exists in the third data storage unit 31 of the compartment server 30, and a large amount of data transmission is not required, it is sufficient to use a PS/2 or RS-232 serial cable.

The central server 60 determines whether query data or encrypted data exists in the third data storage unit 31 of the compartment server 30 through the sixth monitoring line 65, receives query data or encrypted data by switching on the sixth data transmission and reception line 66 when the query data or the encrypted data exists in the third data storage unit 31, switches off the sixth data transmission and reception line 66 upon completion of reception, and when encrypted data is received, decrypts the received encrypted data using a decryption key.

Meanwhile, if it is the case that a decryption key is stored in the third data storage unit 31 of the compartment server 30 together with the encrypted data, the central server 60 receives the encrypted data together with the decryption key through the sixth data transmission and reception line 66 (in the case of the secret key encryption method).

However, it is preferable to operate the central server 60 to estimate the time required for data reception by considering the size of query data or encrypted data and the transfer speed of the sixth data transmission and reception line 66, measure the time elapsed since the initiation of data reception, and stop data reception and switch off the sixth data transmission and reception line 66 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the sixth data transmission and reception line 66 to be performed by a semiconductor switching element (not shown) to prevent noise generation and data distortion caused when a mechanical switching means is used.

The central server 60 is configured to include a database 61 that stores answer data corresponding to query data. Although the present embodiment assumes that the database 61 is installed within the central server 60, the database 61 may also be installed separately outside the central server 60.

When reception of query data is completed, or decryption of encrypted data is completed after the encrypted data is received, the central server 60 extracts answer data corresponding to received or decrypted query data from the database 61, transmits the extracted answer data to the third data storage unit 31 of the compartment server 30 by switching on the sixth data transmission and reception line 66, and switches off the sixth data transmission and reception line 66 upon completion of the transmission.

Meanwhile, the compartment server 30 switches on the third data transmission and reception line 36 to transmit the answer data stored in the third data storage unit 31 to the first data storage unit 11 of the account server 10, stores the answer data therein, and switches off the third data transmission and reception line 36 upon completion of the transmission.

Here, by allowing connection only up to the maximum connection time after data transmission starts, the compartment server 30 and the central server 60 may prevent an abnormally large amount of data compared to the estimated data transmission amount from being transmitted.

In what follows, a structure of a computer network hacking prevention system according to yet another embodiment of the present disclosure will be described.

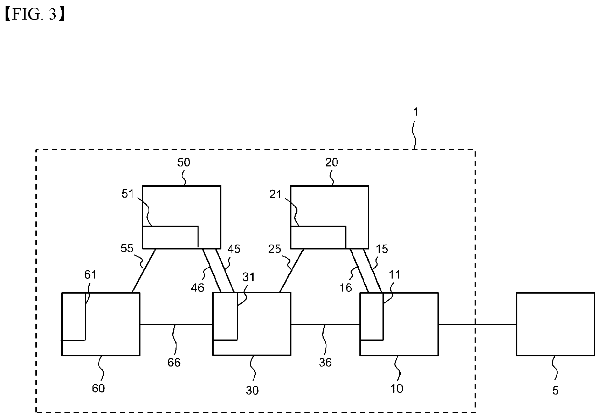

FIG. 3 is a block diagram of a computer network hacking prevention system according to yet another embodiment of the present disclosure.

The computer network hacking prevention system 1 according to a second embodiment of the present disclosure includes an account server 10, a first authentication server 20, a compartment server 30, a second authentication server 50, and a central server 60.

Since the account server 10, the first authentication server 20, and the compartment server 30 are the same as described in the second embodiment, the descriptions thereof will not be repeated below.

However, the compartment server 30 determines whether authentication data exists in the second data storage unit 21 of the first authentication server 20 through the second monitoring line 25, receives query data or encrypted data, access data, and client identification data by switching on the third data transmission and reception line 36 when the authentication data exists in the second data storage unit 21, switches off the third data transmission and reception line 36 upon completion of the reception, and stores completely received query data or encrypted data, access data, and client identification data in the third data storage unit 31.

Meanwhile, although not shown in FIG. 3, the compartment server 30 may be connected to the account server 10 through the second data transmission and reception line. The configuration above is required when the authentication data stored in the second data storage unit 21 includes a decryption key (in the case of the secret key encryption method).

When a determination result of whether authentication data exists in the second data storage unit 21 of the first authentication server 20 through the second monitoring line 25 indicates that the authentication data exists in the second data storage unit 21, the compartment server 30 switches on the second data transmission and reception line, receives the authentication data or decryption key stored in the second data storage unit 21, and switches off the second data transmission and reception line upon completion of the reception.

Here, the completely received decryption key is stored in the third data storage unit 31 together with the query data or encrypted data, access data, and client identification data.

The second authentication server 50 is connected to the compartment server 30 through the fourth monitoring line 45 and the fourth data transmission and reception line 46, which includes a fourth data storage unit 51.

The second authentication server 50 performs a function of minimizing modification of data or risk of hacking by receiving query data or encrypted data, access data, and client identification data stored in the third data storage unit 31 of the compartment server 30 and physically disconnecting a connection upon completion of data reception, performing client authentication and determining whether the query data is suitable to be moved to the central server 60 if the client authentication succeeds, and decrypting encrypted data using a decryption key when encrypted data is received and determining whether the decrypted data is suitable to be moved to the central server 60.

The lengths of the fourth monitoring line 45 and the fourth data transmission and reception line 46 are not subject to a particular limit and may be about 1 to 2 m; however, it is more desirable that the lines have a very short length of about 5 to 10 cm.

Since the fourth monitoring line 45 is used to determine only whether query data or encrypted data exists in the third data storage unit 31 of the compartment server 30, and a large amount of data transmission is not required, it is sufficient to use a PS/2 or RS-232 serial cable.

The second authentication server 50 determines whether query data or encrypted data exists in the third data storage unit 31 of the compartment server 30 through the fourth monitoring line 45, receives query data or encrypted data, access data, and client identification data by switching on the fourth data transmission and reception line 46 when the query data or the encrypted data exists in the third data storage unit 31, switches off the fourth data transmission and reception line 46 upon completion of reception, and performs client authentication.

Meanwhile, if it is the case that a decryption key is stored in the third data storage unit 31 of the compartment server 30 together with encrypted data, the second authentication server 50 receives the encrypted data together with the decryption key through the fourth data transmission and reception line 46 (in the case of the secret key encryption method).

However, it is preferable to operate the first authentication server 20 to estimate the time required for data reception by considering the size of query data or encrypted data and the transfer speed of the first data transmission and reception line 16, measure the time elapsed since the initiation of data reception, and stop data reception and switch off the fourth data transmission and reception line 46 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the fourth data transmission and reception line 46 to be performed by a semiconductor switching element (not shown) to prevent noise generation and data distortion caused when a mechanical switching means is used.

The second authentication server 50 performs client authentication and determines whether query data is suitable to be moved to the central server 60 if the client authentication succeeds; when encrypted data is received, the second authentication server 50 decrypts the received encrypted data using a decryption key and determines whether decrypted query data is suitable to be moved to the central server 60.

For example, when the central server 60 allows transmission and storage only for data files but does not allow transmission and storage for program files, the second authentication server 50 examines whether program code is included in the received or decrypted query data and determines the query data to be unsuitable to be moved to another computing module if the query data includes program code.

To this end, a vaccine program for inspection may be installed in the second authentication server 50. The engine of the vaccine program may be configured to be updated manually or automatically through an external network.

However, when the engine of the vaccine program is configured to be automatically updated through an external network, to improve security, the second authentication server 50 should be configured to access only a specific address for updating the engine of the vaccine program.

If a determination result of whether the query data is suitable to be moved to the central server 60 indicates that the query data is suitable to be moved to the central server 60, the second authentication server 50 stores the query data in the fourth data storage unit 51.

Meanwhile, the authentication data stored in the fourth data storage unit 51 may include a decryption key required for decryption of encrypted data (in the case of the secret key encryption method).

Meanwhile, although not shown in FIG. 3, the second authentication server 50 may be connected to the first authentication server 20 through an authentication key monitoring line and an authentication key transmission and reception line.

In this case, if a determination result of whether authentication data exists in the second data storage unit 21 of the first authentication server 20 through the authentication key monitoring line indicates that the authentication data exists in the second data storage unit 21, the second authentication server 50 receives the authentication data or decryption key stored in the second data storage unit 21 by switching on the authentication key transmission and reception line and switches off the authentication key transmission and reception line upon completion of the reception.

Here, the received decryption key is used for decryption of the encrypted data received through the fourth data transmission and reception line 46.

The central server 60 is connected to the second authentication server 50 through the fifth monitoring line 55 and connected to the compartment server 30 through the sixth data transmission and reception line 66.

The central server 60 performs a function of minimizing modification of data or risk of hacking by receiving query data or encrypted data stored in the third data storage unit 31 of the compartment server 30 and physically disconnecting a connection upon completion of data reception.

The lengths of the fifth monitoring line 55 and the sixth data transmission and reception line 66 are not subject to a particular limit and may be about 1 to 2 m; however, it is more desirable that the lines have a very short length of about 5 to 10 cm.

Since the fifth monitoring line 55 is used to determine only whether query data exists in the fourth data storage unit 51 of the second authentication server 50, and a large amount of data transmission is not required, it is sufficient to use a PS/2 or RS-232 serial cable.

The central server 60 determines whether authentication data exists in the fourth data storage unit 51 of the second authentication server 50 through the fifth monitoring line 55, receives query data or encrypted data by switching on the sixth data transmission and reception line 66 when the authentication data exists in the fourth data storage unit 51, switches off the sixth data transmission and reception line 66 upon completion of reception, and when encrypted data is received, decrypts the received encrypted data using a decryption key.

However, it is preferable to operate the central server 60 to estimate the time required for data reception by considering the size of query data or encrypted data and the transfer speed of the sixth data transmission and reception line 66, measure the time elapsed since the initiation of data reception, and stop data reception and switch off the sixth data transmission and reception line 66 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the sixth data transmission and reception line 66 to be performed by a semiconductor switching element (not shown) to prevent noise generation and data distortion caused when a mechanical switching means is used.

Although not shown in FIG. 3, the central server 60 may be connected to the second authentication server 50 through the fifth data transmission and reception line. The configuration above is required when the authentication data stored in the fourth data storage unit 51 includes a decryption key.

When a determination result of whether authentication data exists in the fourth data storage unit 51 of the second authentication server 50 through the fifth monitoring line 55 indicates that the authentication data exists in the fourth data storage unit 51, the central server 60 switches on the fifth data transmission and reception line, receives the authentication data or decryption key stored in the fourth data storage unit 51, and switches off the fifth data transmission and reception line upon completion of the reception.

The received decryption key is used for decryption of encrypted data received through the sixth data transmission and reception line 66.

The central server 60 is configured to include a database 61 that stores answer data corresponding to query data. Although the present embodiment assumes that the database 61 is installed within the central server 60, the database 61 may also be installed separately outside the central server 60.

When reception of query data is completed, or decryption of encrypted data is completed after the encrypted data is received, the central server 60 extracts answer data corresponding to received or decrypted query data from the database 61, transmits the extracted answer data to the third data storage unit 31 of the compartment server 30 by switching on the sixth data transmission and reception line 66, and switches off the sixth data transmission and reception line 66 upon completion of the transmission.

Meanwhile, the compartment server 30 switches on the third data transmission and reception line 36 to transmit the answer data stored in the third data storage unit 31 to the first data storage unit 11 of the account server 10, stores the answer data therein, and switches off the third data transmission and reception line 36 upon completion of the transmission.

Here, by allowing connection only up to the maximum connection time after data transmission starts, the compartment server 30 and the central server 60 may prevent an abnormally large amount of data compared to the estimated data transmission amount from being transmitted.

In what follows, a computer network hacking prevention method according to one embodiment of the present disclosure will be described.

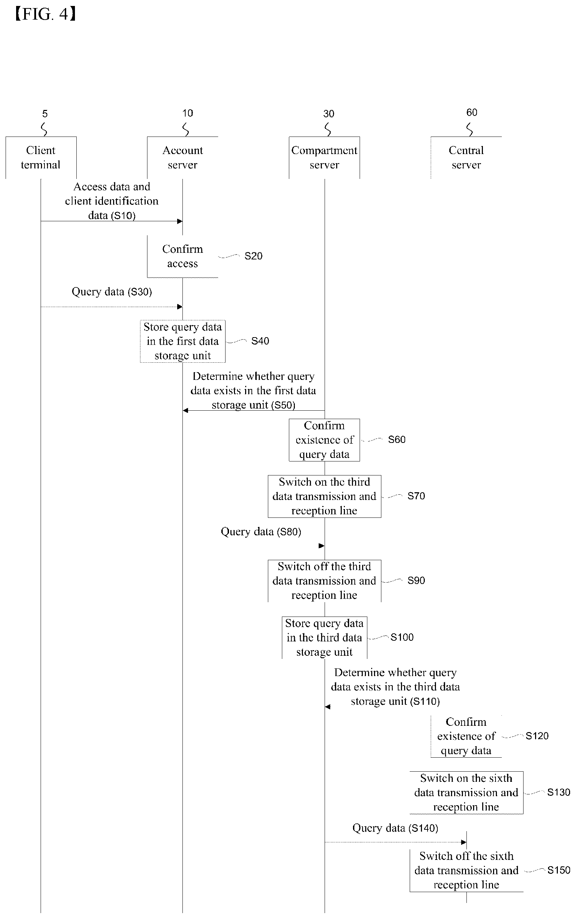

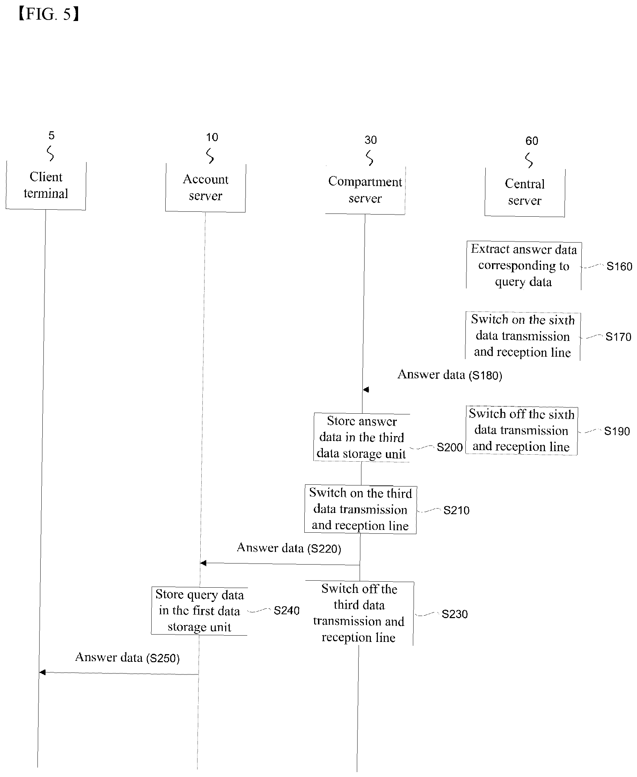

FIG. 4 is a first flow diagram of a computer network hacking prevention method according to one embodiment of the present disclosure, and FIG. 5 is a second flow diagram of a computer network hacking prevention method according to one embodiment of the present disclosure.

FIG. 4 is a first flow diagram of a computer network hacking prevention method according to one embodiment of the present disclosure, illustrating a process of transferring query data from the account server 10 to the central server 60.

The account server 10 receives access data and identification data from a client terminal 5 S10 and confirms access made by the client terminal 5 S20.

Next, query data is received from the client terminal 5 S30, and the received query data is stored in the first data storage unit 11 S40.

The compartment server 30 determines whether query data exists in the first data storage unit 11 of the account server 10 through the third monitoring line 35 S50.

If it is determined that query data exists in the first data storage unit 11 of the account server 10, the compartment server 30 receives the query data S80 by switching on the third data transmission and reception line 36 S70, switches off the third data transmission and reception line 36 upon completion of reception S90, and stores completely received query data in the third data storage unit 31 S100.

The central server 60 determines whether query data exists in the third data storage unit 31 of the compartment server 30 through the sixth monitoring line 65 S110.

If it is determined that query data exists in the third data storage unit 31 S120, the central server 60 receives the query data S 140 by switching on the sixth data transmission and reception line 66 S140 and switches off the sixth data transmission and reception line 66 upon completion of reception S 150.

FIG. 5 is a second flow diagram of a computer network hacking prevention method according to one embodiment of the present disclosure, illustrating a process of transferring answer data from the central server 60 to the client terminal 5.

The central server 60 extracts answer data corresponding to query data from the database 61 S160, transmits the extracted answer data to the compartment server 30 S180 by switching on the sixth data transmission and reception line 66 S 170, and switches off the sixth data transmission and reception line 66 upon completion of the transmission S190.

Then, the answer data is stored in the third data storage unit 31 of the compartment server 30 S200.

At this time, the S190 and S200 steps do not necessarily have to be performed sequentially; the S200 step may be performed independently and simultaneously with the S180 or S190 step, or the S190 step may be performed after the S200 step.

If answer data exists in the third data storage unit 31, the compartment server 30 transmits the answer data to the account server 10 S220 by switching on the third data transmission and reception line 36 S210 and switches off the third data transmission and reception line 36 upon completion of transmission S230.

Then, the answer data is stored in the first data storage unit 11 of the account server 10 S240.

At this time, the S230 and S240 steps do not necessarily have to be performed sequentially; the S240 step may be performed independently and simultaneously with the S220 or S230 step, or the S230 step may be performed after the S240 step.

If answer data exists in the first data storage unit 11, the account server 10 transmits the answer data to the client terminal 5 S250.

A computer network hacking prevention system and method according to the present disclosure provides an advantageous effect in that in the case of receiving query data or transmitting answer data, a transmission and reception line is immediately switched off upon completion of the transmission and reception of data, and thus, a risk such as hacking is minimized.

Throughout the document, the present disclosure has been described in detail according to the embodiments; however, the present disclosure is not limited to the embodiments but may be modified or changed in various ways without deviating from the technical principles and scope of the present disclosure. Therefore, the modifications or changes should be interpreted to belong to the technical scope of the present disclosure.

### [Detailed Description of Main Elements]

| | |
|---|---|
| 1: Computer network hacking prevention system | 5. Client terminal |
| 10: Account server | 11: First data storage unit |
| 15: First monitoring line | 16: First data transmission and reception line |
| 20: First authentication server | 21: Second data storage unit |
| 25: Second monitoring line | |

| | |
|---|---|
| 30: Compartment server | 31: Third data storage unit |
| 35: Third monitoring line | 36: Third data transmission and reception line |
| 44: Fourth monitoring line | 46: Fourth data transmission and reception line |
| 50: Second authentication server | 51: Fourth data storage unit |
| 55: Fifth monitoring line | |
| 60: Central server | 61: Database |
| 65: Sixth monitoring line | 66: Sixth data transmission and reception line |

### INDUSTRIAL AVAILABILITY

The present disclosure relates to a computer network hacking prevention system. The present disclosure immediately switches off a transmission and reception line upon completion of data transmission and reception when query data is received or when answer data is transmitted and thus minimizes a risk such as hacking, which may be used in the fields such as computer manufacturing and computer security.

## Claims

1. A computer network hacking prevention system 1 comprising:
an account server 10, which includes a first data storage unit 11, that confirms access made by a client terminal 5 by receiving access data and client identification data from the client terminal 5, receives query data from the client terminal 5, and stores the received query data;
a compartment server 30, which includes a third data storage unit 31, that is connected to the account server 10 through a third monitoring line 35 and a third data transmission and reception line 36, determines through the third monitoring line 35 whether the query data exists in the first data storage unit 11 of the account server 10, receives the query data by switching on the third data transmission and reception line 36 when the query data exists in the first data storage unit 11, switches off the third data transmission and reception line 36 upon completion of reception, and stores the received query data; and
a central server 60 that is connected to the compartment server 30 through a sixth monitoring line 65 and a sixth data transmission and reception line 66, determines through the sixth monitoring line 65 whether the query data exists in the third data storage unit 31 of the compartment server 30, receives the query data by switching on the sixth data transmission and reception line 66 when the query data exists in the third data storage unit 31, and switches off the sixth data transmission and reception line 66 upon completion of reception.

2. The system 1 of claim 1, further including a database 61 storing answer data corresponding to the query data,
wherein the central server 60 extracts answer data corresponding to the query data from the database 61, transmits the extracted answer data to the third data storage unit 31 of the compartment server 30 by switching on the sixth data transmission and reception line 66, and switches off the sixth data transmission and reception line 66 upon completion of transmitting the answer data,
the compartment server 30 switches on the third data transmission and reception line 36 to transmit the answer data stored in the third data storage unit 31 to the first data storage unit 11 of the account server 10 and switches off the third data transmission and reception line 36 upon completion of transmitting the answer data, and
the account server 10 transmits the answer data stored in the first data storage unit 11 to the client terminal 5.

3. A computer network hacking prevention system 1 comprising:
an account server 10, which includes a first data storage unit 11, that confirms access made by a client terminal 5 by receiving access data and client identification data from the client terminal 5, receives the access data, the client identification data, and the query data from the client terminal 5, and stores the received access data, client identification data, and query data;
a first authentication server 20, which includes a second data storage unit 21 storing authentication data, that is connected to the account server 10 through a first monitoring line 15 and a first data transmission and reception line 16,
a compartment server 30, which includes a third data storage unit 31, that is connected to the first authentication server 20 through a second monitoring line 25 and is connected to the account server 10 through a third data transmission and reception line 36; and
a central server 60 connected to the compartment server 30 through a sixth monitoring line 65 and a sixth data transmission and reception line 66,
wherein the first authentication server 20
determines whether the query data exists in the first data storage unit 11 of the account server 10 through the first monitoring line 15,
receives the access data, the client identification data, and the query data by switching on the first data transmission and reception line 16 when the query data exists in the first data storage unit 11, switches off the first data transmission and reception line 16 upon completion of reception, and performs client authentication, and
determines whether the query data is suitable to be moved to the central server 60 if client authentication succeeds and stores authentication data in the second data storage unit 21 if the query data is suitable to be moved to the central server 60,
the compartment server 30
determines whether the authentication data exists in the second data storage unit 21 of the first authentication server 20 through the second monitoring line 25,
receives the query data by switching on the third data transmission and reception line 36 when the authentication data exists in the second data storage unit 21, switches off the third data transmission and reception line 36 upon completion of reception, and stores the received query data in the third data storage unit 31, and
the central server 60 determines whether the query data exists in the third data storage unit 31 of the compartment server 30 through the sixth monitoring line 65,
receives the query data by switching on the sixth data transmission and reception line 66 when the query data exists in the third data storage unit 31, and switches off the sixth data transmission and reception line 66 upon completion of reception.

4. A computer network hacking prevention system 1 comprising:
an account server 10, which includes a first data storage unit 11, that confirms access made by a client terminal 5 by receiving access data and client identification data from the client terminal 5, receives the access data, the client identification data, and the query data from the client terminal 5, and stores the received access data, client identification data, and query data;
a first authentication server 20, which includes a second data storage unit 21 storing authentication data, that is connected to the account server 10 through a first monitoring line 15 and a first data transmission and reception line 16,
a compartment server 30, which includes a third data storage unit 31, that is connected to the first authentication server 20 through a second monitoring line 25 and is connected to the account server 10 through a third data transmission and reception line 36; and
a central server 60 connected to the compartment server 30 through a sixth monitoring line 65 and a sixth data transmission and reception line 66,
wherein the first authentication server 20
determines whether the query data exists in the first data storage unit 11 of the account server 10 through the first monitoring line 15, switches on the first data transmission and reception line 16 when the query data exists in the first data storage unit 11, requests the account server 10 to encrypt the query data using an encryption key, and switches off the first data transmission and reception line 16,
determines through the first monitoring line 15 whether encryption of the query data is completed, switches on the first data transmission and reception line 16 to receive the encrypted data, the access data, and the client identification data if it is determined that the encryption is completed, switches off the first data transmission and reception line 16 upon completion of the reception, and performs client authentication, and
decrypts the encrypted data using a decryption key when client authentication succeeds, determines whether the decrypted data is suitable to be moved to the central server 60, and stores authentication data in the second data storage unit 21 if it is determined that the decrypted data is suitable to be moved to the central server 60,
the compartment server 30
determines whether the authentication data exists in the second data storage unit 21 of the first authentication server 20 through the second monitoring line 25, receives the encrypted data by switching on the third data transmission and reception line 36 when the authentication data exists in the second data storage unit 21, switches off the third data transmission and reception line 36 upon completion of reception, and stores the received encrypted data in the third data storage unit 31, and
the central server 60
determines whether the encrypted data exists in the third data storage unit 31 of the compartment server 30 through the sixth monitoring line 65, receives the encrypted data by switching on the sixth data transmission and reception line 66 when the encrypted data exists in the third data storage unit 31, switches off the sixth data transmission and reception line 66 upon completion of reception, and decrypts the encrypted data using a decryption key.

5. A computer network hacking prevention system 1 comprising:
an account server 10, which includes a first data storage unit 11, that confirms access made by a client terminal 5 by receiving access data and client identification data from the client terminal 5, receives the access data, the client identification data, and the query data from the client terminal 5, and stores the received access data, client identification data, and query data;
a first authentication server 20, which includes a second data storage unit 21 storing authentication data, that is connected to the account server 10 through a first monitoring line 15 and a first data transmission and reception line 16,
a compartment server 30, which includes a third data storage unit 31, that is connected to the first authentication server 20 through a second monitoring line 25 and is connected to the account server 10 through a third data transmission and reception line 36;
a second authentication server 50, which includes a fourth data storage unit 51 storing authentication data, that is connected to the compartment server 30 through a fourth monitoring line 44 and a fourth data transmission and reception line 46; and
a central server 60 connected to the second authentication server 50 through a fifth monitoring line 55 and connected to the compartment server 30 through a sixth data transmission and reception line 66,
wherein the first authentication server 20
determines whether the query data exists in the first data storage unit 11 of the account server 10 through the first monitoring line 15,
switches on the first data transmission and reception line 16 when the query data exists in the first data storage unit 11, receives the access data, the client identification data, and the query data, switches off the first data transmission and reception line 16 upon completion of reception, and performs client authentication,
determines whether the received query data is suitable to be moved to the central server 60 if client authentication succeeds, and stores authentication data in the second data storage unit 21 if the received query data is suitable to be moved to the central server 60,
the compartment server 30
determines whether the authentication data exists in the second data storage unit 21 of the first authentication server 20 through the second monitoring line 25,
receives the access data, the client identification data, and the query data by switching on the third data transmission and reception line 36 when the authentication data exists in the second data storage unit 21, switches off the third data transmission and reception line 36 upon completion of reception, and stores the received access data, client identification data, and query data in the third data storage unit 31,
the second authentication server 50
determines whether the query data exists in the third data storage unit 31 of the compartment server 30 through the fourth monitoring line 44,
receives the access data, the client identification data, and the query data by switching on the fourth data transmission and reception line 46 when the query data exists in the third data storage unit 31, switches off the fourth data transmission and reception line 46 upon completion of reception, and performs client authentication, and
determines whether the received query data is suitable to be moved to the central server 60 if client authentication succeeds and stores authentication data in the fourth data storage unit 51 if the received query data is suitable to be moved to the central server 60, and
the central server 60
determines whether the authentication data exists in the fourth data storage unit 51 of the second authentication server 50 through the fifth monitoring line 55,
receives the query data by switching on the sixth data transmission and reception line 66 when the authentication data exists in the fourth data storage unit 51, and switches off the sixth data transmission and reception line 66 upon completion of reception.

6. A computer network hacking prevention system 1 comprising:
an account server 10, which includes a first data storage unit 11, that confirms access made by a client terminal 5 by receiving access data and client identification data from the client terminal 5, receives the access data, the client identification data, and the query data from the client terminal 5, and stores the received access data, client identification data, and query data;
a first authentication server 20, which includes a second data storage unit 21 storing authentication data, that is connected to the account server 10 through a first monitoring line 15 and a first data transmission and reception line 16,
a compartment server 30, which includes a third data storage unit 31, that is connected to the first authentication server 20 through a second monitoring line 25 and is connected to the account server 10 through a third data transmission and reception line 36;
a second authentication server 50, which includes a fourth data storage unit 51 storing authentication data, that is connected to the compartment server 30 through a fourth monitoring line 44 and a fourth data transmission and reception line 46; and
a central server 60 connected to the second authentication server 50 through a fifth monitoring line 55 and connected to the compartment server 30 through a sixth data transmission and reception line 66,
wherein the first authentication server 20
determines whether the query data exists in the first data storage unit 11 of the account server 10 through the first monitoring line 15, switches on the first data transmission and reception line 16 when the query data exists in the first data storage unit 11, requests the account server 10 to encrypt the query data using an encryption key, and switches off the first data transmission and reception line 16,
determines through the first monitoring line 15 whether encryption of the query data is completed, switches on the first data transmission and reception line 16 to receive the encrypted data, the access data, and the client identification data if it is determined that the encryption is completed, switches off the first data transmission and reception line 16 upon completion of the reception, and performs client authentication, and
decrypts the encrypted data using a decryption key when client authentication succeeds, determines whether the decrypted data is suitable to be moved to the central server 60, and stores authentication data in the second data storage unit 21 if it is determined that the decrypted data is suitable to be moved to the central server 60,
the compartment server 30
determines whether the authentication data exists in the second data storage unit 21 of the first authentication server 20 through the second monitoring line 25, receives the encrypted data, the access data, and the client identification data by switching on the third data transmission and reception line 36 when the authentication data exists in the second data storage unit 21, switches off the third data transmission and reception line 36 upon completion of reception, and stores the received encrypted data, access data, and client identification data in the third data storage unit 31,
the second authentication server 50
determines whether the encrypted data exists in the third data storage unit 31 of the compartment server 30 through the fourth monitoring line 44, receives the encrypted data, the access data, and the client identification data by switching on the fourth data transmission and reception line 46 when the encrypted data exists in the third data storage unit 31, switches off the fourth data transmission and reception line 46 upon completion of reception, and performs client authentication, and
decrypts the encrypted data using a decryption key if client authentication succeeds, determines whether the decrypted data is suitable to be moved to the central server 60, and stores authentication data in the fourth data storage unit 51 if the decrypted data is suitable to be moved to the central server 60, and
the central server 60
determines whether the authentication data exists in the fourth data storage unit 51 of the second authentication server 50 through the fifth monitoring line 55, receives the encrypted data by switching on the sixth data transmission and reception line 66 when the authentication data exists in the fourth data storage unit 51, switches off the sixth data transmission and reception line 66 upon completion of reception, and decrypts the encrypted data using a decryption key.

7. A computer network hacking prevention method for a computer network hacking prevention system 1 including an account server 10 which includes a first data storage unit 11; a compartment server 30, which includes a third data storage unit 31, that is connected to the account server 10 through a third monitoring line 35 and a third data transmission and reception line 36; and a central server 60 that is connected to the compartment server 30 through a sixth monitoring line 65 and a sixth data transmission and reception line 66, the method comprising:
(a) confirming access made by a client terminal 5 by receiving access data and client identification data from the client terminal 5, receiving query data from the client terminal 5, and storing the received query data in the first data storage unit 11 by the account server 10;
(b) determining through the third monitoring line 35 whether the query data exists in the first data storage unit 11 of the account server 10, receiving the query data by switching on the third data transmission and reception line 36 when the query data exists in the first data storage unit 11, switching off the third data transmission and reception line 36 upon completion of reception, and storing the received query data in the third data storage unit 31 by the compartment server 30; and
(c) determining through the sixth monitoring line 65 whether the query data exists in the third data storage unit 31 of the compartment server 30, receiving the query data by switching on the sixth data transmission and reception line 66 when the query data exists in the third data storage unit 31, and switching off the sixth data transmission and reception line 66 upon completion of reception by the central server 60.

8. The method of claim 7, further including:
(d) extracting answer data corresponding to the query data from a database 61, transmitting the extracted answer data to the third data storage unit 31 of the compartment server 30 by switching on the sixth data transmission and reception line 66, and switching off the sixth data transmission and reception line 66 upon completion of transmission by the central server 60;
(e) switching on the third data transmission and reception line 36 to transmit the answer data stored in the third data storage unit 31 to the first data storage unit 11 of the account server 10 and switching off the third data transmission and reception line 36 upon completion of transmission by the compartment server 30, and
(f) transmitting the answer data stored in the first data storage unit 11 to the client terminal 5 by the account server 10.
